# EUROPEAN PATENT APPLICATION

(11) **EP 1 739 878 A2**
(43) Date of publication of application: **03.01.2007**
(21) Application number: 06116039.6
(22) Date of filing: 26.06.2006
(51) Int. Cl.: H04L 12/24

(54) **Method and apparatus for dynamically calculating the capacity of a packet network**

(30) Priority: 28.06.2005 US 168638
(71) Applicant: AT&T Corp., New York, NY 10013-2412 (US)
(72) Inventor: Croak, Marian, Fair Haven, 07704 (US); Eslambolchi, Hossein, Los Altos Hills, 94022 (US)
(74) Representative: Harding, Richard Patrick

(57) **Abstract**

A method and apparatus for calculating the engineered capacity of a packet network is described. In one example, subscriber usage data is collected from the packet network. The engineered capacity is then updated using the usage data on a periodic basis. In another example, the engineered capacity is subsequently compared with the actual network usage. Afterwards, an alarm is triggered if the actual network usage reaches a predefined threshold of the engineered capacity.

## Description

### BACKGROUND OF THE INVENTION

### Field of the Invention

Embodiments of the present invention generally relate to telecommunications systems and, more particularly, to a method and apparatus for dynamically calculating the capacity of a packet network, e.g., a Voice over Internet Protocol (VoIP) network.

### Description of the Related Art

In order to maintain a high degree of service reliability and availability, network operators must constantly monitor the actual network usage versus the engineered capacity of the network. The engineered capacity is the estimated capacity of the network that is initially established as a theoretical model or parameter at the time of the network's inception. Assumptions used to initially calculate the engineered network capacity need to be validated on a regular basis in order to ensure that the deployed capacity limits are truly accurate. Failing to update the engineered capacity on a regular basis may permit operators to unknowingly exceed the maximum network capacity, which may result in service degradations within the network. Conversely, having an improperly calibrated network could cause the network capacity to be under utilized, which would create more capital asset expenditures than is necessary.

Accordingly, there exists a need in the art for an improved method and apparatus for calculating the capacity of a packet network.

### SUMMARY OF THE INVENTION

In one embodiment, a method and apparatus for calculating the engineered capacity of a packet network is described. More specifically, subscriber usage data is collected from the packet network. The engineered capacity is then updated using the usage data on a periodic basis. In another embodiment, the engineered capacity is subsequently compared with the actual network usage. Afterwards, an alarm is triggered if the actual network usage reaches a predefined threshold of the engineered capacity.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a block diagram depicting an exemplary embodiment of a communication system in accordance with the invention;

FIG. 2 is a block diagram depicting an exemplary configuration of the communication system of FIG. 1 constructed in accordance with one or more aspects of the invention;

FIG. 3 is a flow diagram depicting an exemplary embodiment of a method for dynamically calculating the capacity of a packet network in accordance with one or more aspects of the invention; and

FIG. 4 is a block diagram depicting an exemplary embodiment of a computer suitable for implementing the processes and methods described herein.

### DETAILED DESCRIPTION

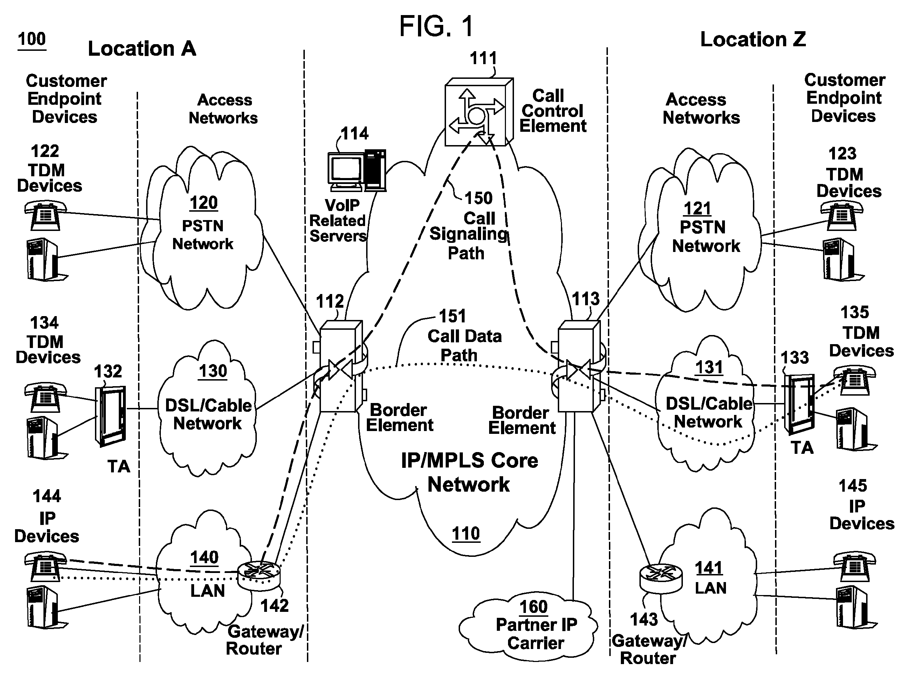

To better understand the present invention, FIG. 1 illustrates an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SolP (Service over Internet Protocol) network is considered an IP network.

In one embodiment, the VolP network may comprise various types of customer endpoint devices connected via various types of access networks to a carrier (a service provider) VolP core infrastructure over an Internet Protocol/Multi-Protocol Label Switching (IP/MPLS) based core backbone network. Broadly defined, a VolP network is a network that is capable of carrying voice signals as packetized data over an IP network. The present invention is described below in the context of an illustrative VolP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network 130, 131 via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such as the Border Elements (BEs) 112 and 113, the Call Control Element (CCE) 111, VoIP related Application Servers (AS)114, and Media Server (MS) 115. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related Application Servers (AS) in order to complete a call that require certain service specific features, e.g. translation of an E.164 voice network address into an IP address and so on.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related application server 114 to obtain the information to complete this call. In one embodiment, the Application Server (AS) functions as a back-to-back user agent. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP 200 OK response message if SIP is used, is sent in the reverse direction back to the CCE 111. After the CCE 111 receives the call acknowledgement message, it will then send a call acknowledgement signaling message, such as a SIP 200 OK response message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

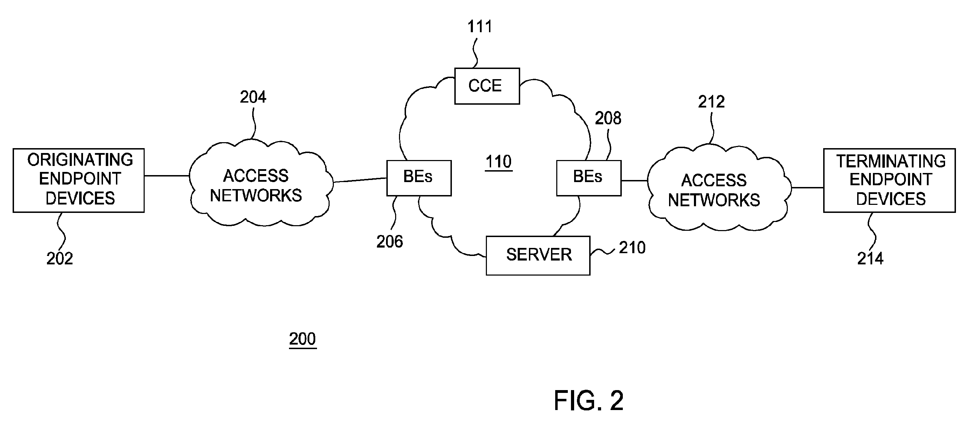

FIG. 2 is a block diagram depicting an exemplary configuration of the communication system of FIG. 1 constructed in accordance with the invention. In the present embodiment, originating endpoint devices 202 are configured for communication with the core network 110 via access networks 204 and border elements 206. Terminating endpoint devices 214 are configured for communication with the core network 110 via access networks 212 and border elements 208. The originating endpoint device 202 and the terminating endpoint device 214 may comprise any of the customer endpoint devices described above (e.g., TDM devices, IP devices, etc.). The access networks 204 and 212 may comprise any of the access networks described above (e.g., PSTN, DSL/Cable, LAN, etc).

The core network 110 may be in communication with a server 210. The server 210 is configured to collect call detail records (CDRs) from the network elements in the core network 110 (e.g., the BEs 206, the BEs 208, and the CCE 111). Notably, various network elements in the core network 110 continuously generate CDRs for every call processed within the network. A CDR is data associated with a telephone call, including the originating telephone number, the dialed telephone number, the date and timestamp, the duration, the call setup delay, the final handling code of the telephone call, and like type parameters known in the art. The final handling code is the code that indicates whether a call has been completed successfully, blocked, cut-off, or the like. A call processed by the core network 110 creates at least one CDR at each network element involved in the call. A CDR created at BEs 206 and 208 for a particular call contains signaling and media information more related to the edge of the core network 110, whereas a CDR created by the CCE 111 for the same call contains signaling and media information more related to the core of the network 110. In one embodiment, a CDR is created on a per call basis. In other words, there is only one CDR created for a call for each network element involved in the call. As such, if multiple network elements are involved in the call, multiple CDRs are created for the call.

Additionally, the CDRs obtained from the network components may also provide or can be used to determine different network performance measures such as the number of calls made during a given time period (e.g., peak and off peak hours), the duration of the calls, the number of enhanced applications or network services accessed during a call or time period, and the like. Notably, this information can be collected on either a per subscriber basis or on a collective network basis.

In one embodiment, the server 210 may request and receive CDRs from the network elements, such as the BEs 206, the BEs 208, and the CCE 111. In another embodiment, the network elements may forward CDRs to the server 210. In either embodiment, the server 210 is configured to process the CDRs to determine the engineered capacity of the network. An exemplary embodiment of a method for dynamically calculating the engineered capacity of a packet network that can be used by the server 210 is described below.

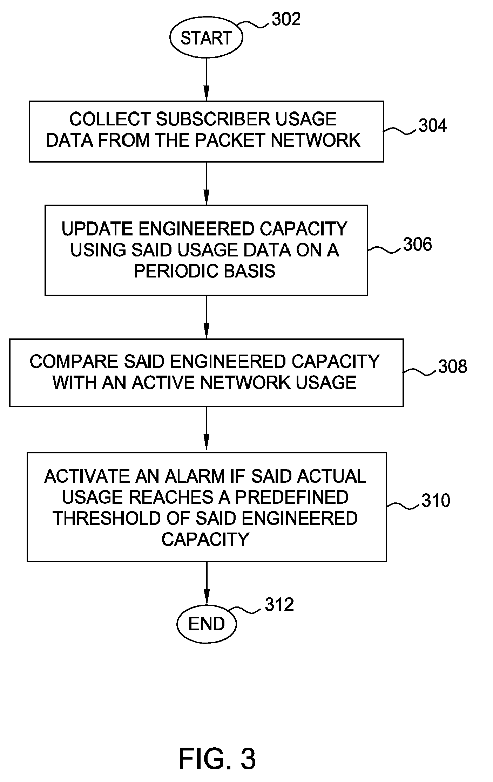

FIG. 3 is a flow diagram depicting an exemplary embodiment of a method 300 for dynamically calculating the engineered capacity in accordance with one or more aspects of the invention. The method 300 begins at step 302. At step 304, subscriber usage data is collected. In one embodiment, a server 210 (or network base component) acquires subscriber usage data from the various network components (application servers, border elements, CCEs, etc.) which possess data that details how subscribers utilize the network. This data may comprise CDRs that contain information relating to the number of calls made by a subscriber during a given time period (e.g., peak and off-peak hours), the duration of the calls, the types of network services a particular subscriber accesses during a call (e.g., enhanced application calls), and the like.

At step 306, the engineered capacity is updated using the subscriber usage data on a periodic basis. The engineered capacity is a measurement of the network's capacity (often treated as a static parameter) which may be based on such parameters such as call flow volume, footprint size, number of subscribers serviced, and the like. The engineered capacity is typically equal to the measurement related to the original theoretical network model from which the network was engineered. However, the assumptions used to calculate the engineered capacity should be constantly validated in order to ensure that the deployed capacity limits are accurate.

For example, the original engineered capacity may be predicated on the assumption that the bandwidth capacity of a connection channel is 10MB/s. However, diagnostics may reveal that the connection channel has actually performed with capacity of 11MB/s before reaching capacity or "failing" (e.g., dropping an unacceptable amount of calls). By failing to update the calculations of engineered capacity, operators may fail to efficiently utilize a majority of the actual network capacity. Similarly, network operators could accidentally exceed their maximum network capacity (e.g., if the capacity of the connection channel was actually 9.5 MB/s).

In one embodiment, the server 210 collects the data on a periodic basis in order to periodically obtain up-to-date information that is representative of the current load and traffic being handled by the network. As described above, the data can be used to determine different network performance measures corresponding with a call duration, call frequency, and the like. The server 210 processes this data to determine a more accurate network capacity and subsequently updates the different components in the network to reflect these modifications. In another embodiment, the server 210 (or network based component) furnishes the data into variable parameters (e.g., a formula or equation) used to update the engineered capacity. For example, the server may obtain a select piece of data from a CDR and associate the data with a particular parameter (e.g., call setup duration of 0.001 seconds is assigned to value "x"). The server then applies the parameter to a formula (e.g., Σ*xᵢ*) that may be used to update the engineered capacity level. Because the present invention allows for the frequent updating of the engineered network capacity, network capacities will be less likely to be exceeded, or alternatively, under utilized.

At step 308, the calculated engineered capacity and the actual network usage are compared. In one embodiment, the actual network usage may be readily obtained by the server 210. The server 210 may accomplish this task in a manner that includes: deploying probes, communicating with the network components, utilizing CDRs, and the like. The comparison is conducted in order to determine if the actual network usage exceeds (or conversely, is significantly less than) the engineered capacity. This may be accomplished by establishing at least one threshold based on the magnitude of the actual network usage or percentage of the engineered capacity.

At step 310, an alarm is activated if the actual network usage reaches a predefined threshold of the engineered capacity. For example, in the event the actual network usage approaches 95% of the engineered capacity of the network, an alarm may be triggered to notify network engineers that the network is approaching full capacity. Similarly, if the capacity falls to 70% (or some other predetermined "unacceptable" level), an alarm may be triggered to alert network engineers that the network is being under utilized. Thus, the utilization of an alarm contributes to efficient resource management of the network. The method 300 continues to step 312 and ends.

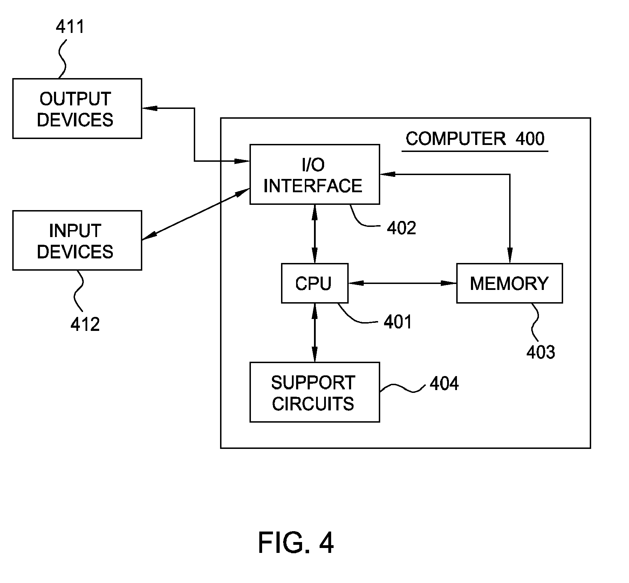

FIG. 4 is a block diagram depicting an exemplary embodiment of a computer 400 suitable for implementing the processes and methods described herein. The computer 400 may be used to implement the server 210 of FIG. 2. The computer 400 includes a central processing unit (CPU) 401, a memory 403, various support circuits 404, and an I/O interface 402. The CPU 401 may be any type of microprocessor known in the art. The support circuits 404 for the CPU 401 include conventional cache, power supplies, clock circuits, data registers, I/O interfaces, and the like. The I/O interface 402 may be directly coupled to the memory 403 or coupled through the CPU 401. The I/O interface 402 may be coupled to various input devices 412 and output devices 411, such as a conventional keyboard, mouse, printer, display, and the like.

The memory 403 may store all or portions of one or more programs and/or data to implement the processes and methods described herein. Notably, the memory 403 may store engineered capacity software to update the engineered capacity level of a packet network, as described above. Although one or more aspects of the invention are disclosed as being implemented as a computer executing a software program, those skilled in the art will appreciate that the invention may be implemented in hardware, software, or a combination of hardware and software. Such implementations may include a number of processors independently executing various programs and dedicated hardware, such as ASICs.

The computer 400 may be programmed with an operating system, which may be OS/2, Java Virtual Machine, Linux, Solaris, Unix, Windows, Windows95, Windows98, Windows NT, and Windows2000, WindowsME, and WindowsXP, among other known platforms. At least a portion of an operating system may be disposed in the memory 403. The memory 403 may include one or more of the following random access memory, read only memory, magneto-resistive read/write memory, optical read/write memory, cache memory, magnetic read/write memory, and the like, as well as signal-bearing media as described below.

An aspect of the invention is implemented as a program product for use with a computer system. Program(s) of the program product defines functions of embodiments and can be contained on a variety of signal-bearing media, which include, but are not limited to: (i) information permanently stored on non-writable storage media (e.g., read-only memory devices within a computer such as CD-ROM or DVD-ROM disks readable by a CD-ROM drive or a DVD drive); (ii) alterable information stored on writable storage media (e.g., floppy disks within a diskette drive or hard-disk drive or read/writable CD or read/writable DVD); or (iii) information conveyed to a computer by a communications medium, such as through a computer or telephone network, including wireless communications. The latter embodiment specifically includes information downloaded from the Internet and other networks. Such signal-bearing media, when carrying computer-readable instructions that direct functions of the invention, represent embodiments of the invention.

While the foregoing is directed to embodiments of the present invention, other and further embodiments of the invention may be devised without departing from the basic scope thereof, and the scope thereof is determined by the claims that follow.

## Claims

1. A method for dynamically updating engineered capacity level of a packet network, comprising:
collecting subscriber usage data from said packet network; and
utilizing said subscriber usage data to update said engineered capacity level of said packet network on a periodic basis.

2. The method of claim 1, wherein said packet network comprises an Internet Protocol (IP) network.

3. The method of claim 1 or 2, wherein said subscriber usage data comprises at least one call detail record.

4. The method of claim 1, 2, or 3, wherein said subscriber usage data is collected on a per subscriber basis.

5. The method of any preceding claim, further comprising:
comparing said engineered capacity level with an actual network capacity level; and
providing an alarm if said actual network capacity level reaches a predefined threshold associated with said engineered capacity level.

6. The method of any preceding claim, wherein said utilizing step comprises:
enabling a network based component to provide said subscriber usage data into variable parameters used to update said engineered capacity level.

7. The method according to any one of claims 2 to 7, wherein said IP network comprises at least one of: a voice over IP network and a service over IP network.

8. A computer readable medium having stored thereon instructions that, when executed by a processor, cause the processor to perform a method for dynamically updating engineered capacity level of a packet network, comprising:
collecting subscriber usage data from said packet network; and
utilizing said subscriber usage data to update said engineered capacity level of said packet network on a periodic basis.

9. The computer readable medium of claim 8, wherein said packet network comprises an Internet Protocol (IP) network.

10. The computer readable medium of claim 8 or 9, wherein said subscriber usage data comprises at least one call detail record.

11. The computer readable medium of claim 8, 9, or 10, wherein said subscriber usage data is collected on a per subscriber basis.

12. The computer readable medium according to any one of claims 8 to 11, further comprising:
comparing said engineered capacity level with an actual network capacity level; and
providing an alarm if said actual network capacity level reaches a predefined threshold associated with said engineered capacity level.

13. The computer readable medium according to any one of claims 8 to 12, wherein said utilizing step comprises:
enabling a network based component to provide said subscriber usage data into variable parameters used to update said engineered capacity level.

14. An apparatus for dynamically updating engineered capacity level of a packet network, comprising:
means for collecting subscriber usage data from said packet network; and
means for utilizing said subscriber usage data to update said engineered capacity level of said packet network on a periodic basis.

15. The apparatus of claim 14, wherein said packet network comprises an Internet Protocol (IP) network.

16. The apparatus of claim 14 or 15, wherein said subscriber usage data comprises at least one call detail record.

17. The apparatus of claim 14, 15, or 16, wherein said subscriber usage data is collected on a per subscriber basis.

18. The apparatus according to any one of claims 14 to 17, further comprising:
means for comparing said engineered capacity level with an actual network capacity level; and
means for providing an alarm if said actual network capacity level reaches a predefined threshold associated with said engineered capacity level.

19. The apparatus according to any one of claims 14 to 18, wherein said means for utilizing comprises:
means for enabling a network based component to provide said subscriber usage data into variable parameters used to update said engineered capacity level.

20. The apparatus of claim 15, wherein said IP network comprises at least one of:
a voice over IP network and a service over IP network.
